# EUROPÄISCHE PATENTSCHRIFT

(11) **EP 0 863 792 B1**
(45) Veröffentlichungstag und Bekanntmachung des Hinweises auf die Patenterteilung: **29.09.1999**
(21) Anmeldenummer: 96939854.4
(22) Anmeldetag: 20.11.1996
(51) Int. Cl.: B01D 63/06, B01D 65/00

(54) **AUF INTEGRITÄT TESTBARE FILTRATIONS-EINHEIT MIT HYDROPHILEN, PORÖSEN MEMBRANEN**
FILTRATION UNIT WHICH CAN BE TESTED FOR INTEGRITY AND HAS HYDROPHILIC POROUS MEMBRANES
UNITE DE FILTRATION DONT L'INTEGRITE PEUT ETRE CONTROLEE ET COMPRENANT DES MEMBRANES HYDROPHILES ET POREUSES

(30) Priorität: 25.11.1995 DE 19543955
(43) Veröffentlichungstag der Anmeldung: 16.09.1998
(73) Patentinhaber: SARTORIUS AG, 37075 Göttingen (DE)
(72) Erfinder: KONSTANTIN, Peter, D-66538 Neunkirchen (DE); REIF, Oscar-Werner, D-30173 Hannover (DE); RUPP, Jürgen, D-37077 Göttingen (DE); SOELKNER, Peter, D-37077 Göttingen (DE)
(86) Internationale Anmeldenummer: EP9605105
(87) Internationale Veröffentlichungsnummer: WO9719743

(56) Entgegenhaltungen:
- EP-A- 0 096 306
- WO-A-85/05286
- DE-A- 3 240 143
- DE-C- 4 234 816
- US-A- 4 264 447
- PATENT ABSTRACTS OF JAPAN vol. 013, no. 224 (C-599), 24.Mai 1989 & JP 01 034403 A (KURABO IND LTD), 3.Februar 1989, & DATABASE WPI Section Ch, Week 8911 Derwent Publications Ltd., London, GB; Class A88, AN 89-081693
- PATENT ABSTRACTS OF JAPAN vol. 018, no. 157 (C-1180), 16.März 1994 & JP 05 329338 A (ROKI TECHNO:KK), 14.Dezember 1993, & DATABASE WPI Section Ch, Week 9403 Derwent Publications Ltd., London, GB; Class J01, AN 94-022024
- PATENT ABSTRACTS OF JAPAN vol. 016, no. 584 (C-1013), 24.Dezember 1992 & JP 04 235722 A (FUJI PHOTO FILM CO LTD), 24.August 1992, & DATABASE WPI Section Ch, Week 9241 Derwent Publications Ltd., London, GB; Class A88, AN 92-334778
- PATENT ABSTRACTS OF JAPAN vol. 017, no. 073 (C-1026), 15.Februar 1993 & JP 04 277017 A (FUJI PHOTO FILM CO LTD), 2.Oktober 1992, & DATABASE WPI Section Ch, Week 9246 Derwent Publications Ltd., London, GB; Class D15, AN 92-377093
- PATENT ABSTRACTS OF JAPAN vol. 94, no. 010 & JP 06 277466 A (TOYO ROSHI KAISHA LTD), 4.Oktober 1994,

## Beschreibung

Die Erfindung bezieht sich auf eine auf Integrität testbare Filtrationseinheit mit hydrophilen, porösen Polymermembranen, die in ihren Randbereichen mit thermoplastischem Polymermaterial fluiddicht in Verankerungselementen eingebettet sind, und eine verbesserte Filtrationssicherheit und Filtrationsleistung aufweisen.

Auf Integrität testbare Filtrationseinheiten mit hydrophilen, poröse Membranen finden Anwendung in Bereichen mit hohen Anforderungen an die Filtrationssicherheit, insbesondere in der pharmazeutischen und Lebensmittelindustrie, im medizinischen und Larborbereich und in der Biotechnologie. Sie werden insbesondere in Form von Filterkerzen eingesetzt.

Filtrationssicherheit bedeutet, daß die Filtrationseinheiten besonderen Anforderungen bezuglich ihrer mechanischen und chemischen Stabilität genügen müssen und daß sie auf Integrität testbar sein müssen.
Filtrationsleistung bedeutet der Volumenfluß an Filtrat pro Zeiteinheit, die zum Beispiel als Wasserdurchflußrate angegeben werden kann.
Die Hydrophilie der porösen Polymermembranen kann aufgrund einer Strukturmorphologie, eines Hydrophilierungs-/Netzmittel- oder Polymerzusatzes hervorgerufen sein.

Ein in der Praxis häufig durchgeführter Integritätstest für Filtrationseinheiten mit hydrophilen, porösen Membranen besteht in der einseitigen Beaufschlagung der Membran, deren Poren mit einer Flüssigkeit, in der Regel Wasser, gefüllt sein müssen, mit einem unter Prüfdruck stehendem Gas, in der Regel Luft. Aus der Messung des zeitlichen Verlaufs des Druckabfalls auf der mit Prüfgas beaufschlagten Membranseite oder der Menge des durch die Membran hindurchgetretenen Prüfgases können Rückschlüsse auf die Integrität der Membranen beziehungsweise der Filtrationseinheit gezogen werden. Derartige Integritätstests sind als Druckhaltetest, Bubble-Point-Test und Diffusionstest bekannt.

Der Einbau von hydrophilen, porösen Membranen aus organischen Polieren in Filtrationseinheiten ist in der Praxis mit einem hoben Aufwand verbunden, will man die Quote an nicht auf Integrität prüfbaren Filtrationseinheiten gering halten. Ein gängiges Verfahren besteht darin, die Membranen in ihren Randbereichen in Schmelzen von thermoplastischen Polymermaterialien in Verankerungselemente einzubetten und durch anschließendes Erstarren des Siegelmaterials zu fixieren, wobei im Einbettungsbereich eine fluiddichte Verbindung entsteht. Durch die Einwirkung der heißen Schmelze des thermoplastischen Polymermaterials auf die hydrophilen, porösen Membranen werden jedoch negative Veränderungen in den Eigenschaften der Membranen innerhalb des Fixierungsbereichs und unmittelbar benachbart zu diesen Bereichen hervorgerufen. So kommt es beispielsweise zu einer Hydrophobierung der hydrophilen, porösen Membranen in einer Randzone, die dem Einbettungsbereich benachbart ist. Das hat zur Folge, daß diese hydrophoben Randzonen nicht mehr von Wasser benetzt werden. Bei der Durchführung des Integritätstests passiert das Prüfgas ungehindert die nicht mit Wasser gefüllten Poren dieser Randzone und täuscht eine nicht integere Filtrationseinheit vor. Die Hydrophobierung kann dadurch verursacht werden, daß in der Membran enthaltene Hydrophilierungsmittel bei der Schmelztemperatur des thermoplastischen Polymermaterials verdampfen oder wegdiffundieren oder die Hydrophilierungsmittel durch chemischen Abbau oder sterische Veränderungen ihre hydrophilen Eigenschalten verlieren. Wenn die Hydrophilie eine latente Materialeigenschaft der Membranen selbst ist, wie beispielsweise bei durch Phaseninversion nach dem Fällbadverfahren erzeugten mikroporösen Polyamidmembranen, verlieren diese Membranen ihre Hydrophilie, wenn sie bis kurz unterhalb ihres Erweichungspunktes erhitzt werden (US-PS 4,340,479).

Die hydrophilen, porösen Membranen sind außerdem häufig spröde, mechanisch wenig belastbar und gegenüber einem Ein- und Weiterreißen empfindlich, sodaß bei ihrer Handhabung, beispielsweise beim Schneiden, Stanzen, beim Plissieren oder beim Einbau in Filtrationseinheiten Fehlstellen in den Membranen verursacht werden können. Durch Einwirkung der heißen Schmelze des thermoplastischen Polymermaterials zur Einbettung der Randbereiche der Membranen in die Verankerungselemente wird die mechanische Stabilität der Membranen weiter herabgesetzt, sodaß es in der Randzone, die dem Einbettungsbereich benachbart ist, häufig zu Membranbrüchen kommt, wodurch derartige Filtrationseinheiten nicht mehr auf Integrität testbar sind.

Zur Vermeidung des Effekts der Randhydrophobie wird nach der unter Artikel 54(3) EPÜ fallenden WO-A1 96/14913 eine hydrophobe Membran nach der Einbettung in ein thermoplastisches Polymermaterial durch ein Hydrophilierungsmittel nachträglich hydrophil gemacht.
Zur Überwindung der Randhydrophobie wird nach der EP-A3 0 096 306 eine Randversiegelung von hydrophilen porösen Membranen, z.B. aus Polyamid, durch einen heißsiegelbaren nichtporösen Polyesterfilm vorgeschlagen, welcher einseitig mit einem lösungsmittelfreien Polyethylenüberzug als Schmelzkleber versehen ist. In der gleichen Druckschrift wird auch vorgeschlagen, die Porosität der hydrophilen Membranen in den Randstreifen zu verringern. Dazu werden die Randstreifen entweder aus einer eine geringere Porengröße ergebenden Gießlösung als die Hauptfläche der Membran erzeugt oder die Randstreifen werden mechanisch verpreßt, so daß die Poren darin kollabieren.
In der DE-A1 38 03 341 und US-PS 4,969,997 werden poröse Membranen beschrieben, die aufgrund einer Überführung der Struktur auf einer Membranseite in einen filmartigen Zustand fluidundurchlässige Steilen aufweisen. Diese Steilen werden dadurch erzeugt, daß Hitze oder Dampf eines Lösungsmittels oder Lösungsmittelgemisches für das Membranmaterial gezielt auf die zu verfilmende Stelle auf einer Seite der Membran einwirkt und das Membranmaterial bis zur gewünschten Tiefe löst.
Die EP-B1 0 036 315 erwähnt neben einem 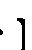 Heißsiegel" und einem mechanischen Verfahren einen Prozeß, bei dem der empfindliche Bereich der porösen Membranen durch Vergießen mit Leim behandelt wird. Der Nachteil dieses Verfahrens liegt in der ungenügenden Temperaturstabilität der verleimten Membranzonen bei Beaufschlagung mit mehreren Dampfzyklen bei 134°C.
Nach der DE-C1 43 39 810 werden die hydrophilen, porösen Membranen in den für die Einbettung vorgesehenen Bereichen mit einer Lösung eines Hydrophilierungsmittels getränkt, so daß sich die Membranen mit der Lösung in den vorgegebenen Bereichen sättigt. Die behandelten Membranen werden anschließend gewaschen und getrocknet. Die so modifizierten Membranen sollten in ihrem imprägnierten Bereich vorzugsweise mindestens um das Doppelte hydrohiler sein als in den unbehandelten Membranbereichen, sodaß nach ihrer Einbettung aufgrund des großen Überschusses an Hydrophilierungsmittel keine Randhydrophobie mehr auftritt.

Die vorgeschlagenen Lösungen haben entweder den Nachteil, daß sie technologisch aufwendig sind, zusätzlich Fremdstoffe eingetragen werden, bei denen die Gefahr der Auswaschung während des Filtrationsprozesses besteht, oder daß die aktive Filtrationsfläche z. B. durch Verfilmung oder Belegung mit einem nichtporösen Film verringert und die Filtrationsleistung herabgesetzt wird und daß sie die mechanische Beeinträchtigung der Membranen im Randbereich der Einbettung nicht verringern.

Der Erfindung liegt daher die Aufgabe zugrunde, eine auf Integrität testbare Filtrationseinheit mit hydrophilen, porösen Membranen zu schaffen, die in ihren Randbereichen mit thermoplastischem Polymermaterial fluiddicht ohne Auftreten von Randhydrophobie in Verankerungselemente eingebettet sind, wobei die Filtrationseinheit über eine verbesserte Filtrationssicherheit und Filtrationsleistung verfügen soll.

Die Aufgabe wird dadurch gelöst, daß solche hydrophilen, porösen Membranen in ihren Randbereichen mit thermoplastischem Polymermaterial fluiddicht in Verankerungselemente der Filtrationseinheit eingebettet werden, die mindestens in ihren Randbereichen und auf mindestens einer Seite vor der Einbeltung mit mindestens einem porösen Flächengebilde aus thermoplastischen Polymerfasern durch Druck- und Temperatureinwirkung verbunden sind.

Das Dokument JP 01 034403 A (= JP 64 034403) beschreibt eine Filtrationseinheit mit porösen hydrophoben Membranen, die in ihren Randbereichen mit thermoplastischem Polymermaterial fluiddicht in Verankerungselementen eingebettet sind. Die porösen Membranen sind in ihren Randbereichen auf mindestens einer Seite mit einem porösen Flächengebilde aus einem thermoplastischen Verstärkungsmaterial verbunden. Darüberhinaus können die Membran und Stützschichten einen Mehrschichtaufbau bilden. Diese Stützschichten sind porös und sind z.B. Vliese aus einem thermoplastischen Material. Die JP 05 329338 A beschreibt ebenfalls eine Filtrationseinheit mit porösen hydrophoben Membranen, die in ihren Randbereichen mit thermoplastischem Polymermaterial fluiddicht in Verankerungselementen eingebettet sind. Die porösen Membranen sind in ihren Randbereichen vor der Einbettung mit einem porösen Flächengebilde aus einem thermoplastischen Stützmaterial verbunden. Das Problem der Randhydrophobie kann in beiden Fällen nicht auftreten, weil ausschließlich hydrophobe Membranen verwendet werden.
Die JP 04 235722 A beschreibt eine Filtrationseinheit mit hydrophoben und hydrophilen porösen Membranen, die in ihren Randbereichen mit thermoplastischem Polymermaterial fluiddicht in Verankerungselementen eingebettet sind. Auf den Membranen sind in ihren Randbereichen und auf mindestens einer Seite thermoplastische Flächengebilde aus einer dichten Folie auflaminiert oder mittels Klebstoff aufgeklebt. Die Folien decken auch einen Randbereich der Membran mit ab, der außerhalb der Veranketungselemente liegt und somit für die Filtration nicht zur Verfügung steht.

Überraschend weisen die erfindungsgemäßen Filtrationseinheiten eine Filtrationsleistung für Wasser von mindestens 90% auf im Vergleich mit einer Filtrationseinheit, bei der zwischen den Membranen und dem porösen Flächengebilde keine Verbindung vorhanden ist.
Verwendet man dagegen integral verstärkte hydrophile, poröse Membranen, wie sie z.B. aus der DE-C1 40 25 768 bekannt sind, so erhält man zwar auf Integrität testbare Filtrationseinheiten, allerdings weisen sie eine verminderte Filtrationsleistung zwischen ungefähr 10 bis ungefähr 40% auf, was bei Anwendung in industriellen Filtrationsprozessen wirtschaftlich ungünstig ist.

Die fluiddichte Einbettung der mit porösen Flächengebilden verbundenen porösen Membranen in den Verankerungselementen der Filtrationseinheit wird in bekannter Weise durchgeführt, beispielsweise durch Ultraschallschmelzen oder Wärmestrahlungsschmelzen eines thermoplastischen Polymermaterials, das in das Verankerungselement eingebracht wird oder Bestandteil des Verankerungselements selbst ist, wie beispielsweise im Falle von Endkappen eines patronenartigen Filterelements. Erfindungsgemäß durchdringt dabei die Schmelze des thermoplastischen Polymermaterials bevorzugt das poröse Flächengebilde, um eine fluiddichte Verbindung mit dem Verankerungselement zu bilden, ohne das die Membran selbst nennenswert in Mitleidenschaft gezogen wird. Erscheinungen der Randhydrophobie oder eine Beeinträchtigung der mechanischen Stabilität der Membran treten nicht auf.

Überraschenderweise wurde gefunden, daß die Aufgabe der Erfindung nur dann gelöst werden kann, wenn während der Einbettung in die Verankerungselemente eine physikalische/chemische Verbindung zwischen der hydrophilen, porösen Membran und dem porösen Flächengebilde aus thermoplastischen Polymerfasern vorliegt. Besteht zwischen der Membran und dem porösen Flächengebilde während des Einbettens in die Verankerungselemente lediglich ein loser Kontakt, beispielsweise durch Aneinanderlegen der Membran und des Flächengebildes, so sind keine auf Integrität testbaren Filtrationseinheiten erhältlich. Wem die hydrophile, poröse Membran mit dem porösen Flächengebilde aus thermoplastischen Polymerfasern dagegen verbunden ist, schützen die thermoplastischen Polymerfasern des porösen Flächengebildes die poröse Membran wahrscheinlich aufgrund der Wärmeabführung während des Phasenübergangs fest/flüssig des bei relativ niedrigen Temperaturen schmelzenden porösen Flächengebildes derart, daß die Wirkung des Hydrophilierungsmittels oder die latente Hydrophilie des Membranpolymers erhalten bleibt. Außerdem überdeckt die flüssige Schmelze des porösen thermoplastischen Flächengebildes die Poren der durch thermische Belastung eventuell geschädigten Membran im Randbereich der Einbettung in die Verankerungselemente und verhindert dort eine Randhydrophobie. Durch die Verbindung zwischen der porösen Membran und dem porösen Flächengebilde fließt die flüssige Schmelze durch Kapillarkräfte in die poröse Membran oder bedeckt durch Adhäsionskräfte die Membran und versiegelt diese Bereiche. Die unmittelbare Anhaftung von poröser Membran und Flächengebilde fordert auch die Wirkung der Wärmeabführung und somit den thermischen Schutz der Hydrophilie.

Die porösen Flächengebilde können auf den porösen Membranen auflaminiert sein, wie es im Falle von Kernmantelvliesen beispielsweise in der DE-C1 42 34 816 offenbart wurde. Die physikalische/chemische Verbindung zwischen dem porösen Flächengebilde und der Membran kann sowohl durch einen Laminiervorgang mit bekannten Vorrichtungen, als auch durch Druck- und Temperatureinwirkung während der Weiterverarbeitung der Flächengebilde, zum Beispiel des Plissierens, erfolgen.
Als besonders vorteilhaft hat sich die Verwendung eines Verbundes aus einem Dreischichtaufbau ( 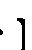 Sandwich-Aufbau") erwiesen, insbesondere wenn er aus einem Kernmantelvlies besteht, das auf der einen Seite mit einer porösen Membran und auf der anderen Seite beispielsweise mit einem Gewebe oder einem weiteren Vlies verbunden ist. Hierdurch werden der Schutz der porösen Membran vor Randhydrophobie und die mechanische Stabilität deutlich erhöht. Die Filtrationsleistung (Durchflußleistung) eines solchen Verbundes reduziert sich im Vergleich zur unverstärkten Membran um weniger als 10%.
Im Falle der Verwendung eines Laminats aus porösem Flächengebilde und poröser Membran hat es sich zur Vermeidung von Randhydrophobie als ausreichend erwiesen, wenn die Verbindung zwischen beiden Lagen nur punktuell erfolgt und die Durchflußleistung des Verbundes im Vergleich zur unverstärkten porösen Membran lediglich um einen Wert von weniger als 2.5 % reduziert wird. Ein solcher Verbund wird beispielsweise durch den Plissiervorgang mit einer Plissiertemperatur unterhalb der Schmelztemperatur des porösen Flächengebildes und einem entsprechenden Plissieranpreßdruck auf den Verbund erreicht. Wird die poröse Membran nur im Randbereich mit einem porösen Flächengebilde laminiert, so nimmt die Durchflußleistung um weniger als bis 2% ab.

Als poröse Flachengebilde werden aus organischen Polymeren bestehende Vliese, Gewebe, Gewirke und/oder Gitter verwendet. Bevorzugt werden Vliese eingesetzt mit einer wirren Faseranordnung. Die porösen Flächengebilde werden durch einen Abscheidegrad charakterisiert, der einer Porengröße im Bereich zwischen 0,5 bis 100 µm entspricht, bevorzugt ist ein Bereich zwischen 1 und 50 µm. Zur Erhöhung der Filtrationsleistung ist es von Vorteil, wenn die porösen Flächengebilde einen Porengrößengradienten aufweisen, das heißt, wenn die Porengröße in Anströmrichtung zu- oder abnimmt. Besonders vorteilhaft ist es, poröse Flächengebilde zu verwenden, deren Porengröße sich in Richtung des Randbereichs, der fluiddicht in die Verankerungselemente eingebettet wird, verringert. Damit erreicht man einen erhöhten Schutz der hydrophilen porösen Membranen in ihrem Randbereich und senkt die von den porösen Flächengebilden verursachte Durchflußminderung des Filterelements auf ein Minimum.
Legt man als Maß für die Porosität der porösen Flächengebilde die nach DIN 53 887 bei einer Druckdifferenz von Δp=0,5 bar gemessene Luftdurchlässigkeit zugrunde, dann werden poröse Flächengebilde mit einer Luftdurchlässigkeit von 150-4000 dm³/sm² bevorzugt. Besonders bevorzugt werden solche mit einer Luftdurchlässigkeit zwischen 600 und 1500 dm³/sm².
Das nach dem Standard der Deutschen Industrienorm (DIN) 53 854 bestimmte Flächengewicht liegt zwischen 20 und 120 g/m², insbesonder zwischen 30 und 80 g/m². Die nach DIN 53 855/1 bestimmte Dicke liegt vorzugsweise zwischen ungefähr 0,05 und ungefähr 0,60 mm.
Die porösen Flächengebilde bestehen aus Polymerfasern mit Porendurchmessern im Bereich zwischen etwa 10 µm und etwa 50 µm. Bevorzugt sind Flächengebilde aus Kernmantelfasern, weil sie dem Membranverbund eine ausgezeichnete mechanische Stabilität verleihen. Gute Ergebnisse werden erreicht, wenn Kernmantelfasern mit Polypropylen (PP) als Kernmaterial beispielsweise mit einem Schmelzpunkt im Bereich von 150°C ± 10°C und mit Polyethylen (PE) als Mantelmaterial beispielsweise mit einem Schmelzpunkt im Bereich von 135°C ± 5°C, 120 ± 5°C oder 105°C ± 5°C verwendet werden. Der höher schmelzende PP-Kern verhindert weitestgehend ein Wegfließen der Schmelze des PE-Mantels der Polymerfaser und ermöglicht somit das Eindringen des flüssigen PE in die poröse Membran durch Kapillarkräfte im Randbereich zu den Verankerungselementen. Das Massenverhältnis der Polymere PP:PE (Kernpolymer: Mantelpolymer) in den Kernmantelfasern kann zwischen 2:98 bis 90:10 variieren, wobei ein Verhaltnis 50:50 bevorzugt ist. Die fehlende Stabilität bei dem Schmelzvorgang bei reinen PE-Flächengebilden durch das Ferien des PP-Kerns (wie bei Kernmantelvliesen) kann durch einen erhöhten Schmelzeintrag mittels eines erhöhten Flächengewichtes des PE-Flächengebildes ausgeglichen werden.

Die hydrophilen, porösen Membranen bestehen aus Materialien, die ausgewählt sind aus der Gruppe der Polysulfone, Polyethersulfone und Polyamide.
Die porösen Membranen besitzen Porengrößen zwischen etwa 0,05 und etwa 10 µm, wobei ein Bereich zwischen 0,1 und 1,2 µm bevorzugt ist. Besonders bevorzugt wird ein Bereich zwischen 0,1 und 0,65 µm.

Die Erfindung ist anwendbar auf alle Filtrationséinheiten, bei denen die porösen Membranen in ihren Randbereichen mit thermoplastischem Polymermaterial thermisch fluiddicht in Verankerungselemente eingebettet werden. Beispiele sind Filtrationseinheiten mit patronenartigen Filterelementen, wie Filtercapsulen oder Filterkerzen, mit flachen Filterelementen, wie Disposables und Rohrmodule mit rohrförmigen Filterelementen.

Verankerungselemente sind die Konstruktionsteile, die zusammen mit den eingebetteten Membranen die Filtrationseinheit in eine Filtrat- und Unfiltratseite derart unterteilen, daß ein zu filtrierendes Fluid von der Unfiltrat- auf die Filtratseite bestimmungsgemäß nur durch Passage durch die Membran gelangen kann. Solche Konstruktionsteile sind beispielsweise Endkappen von Filterkerzen oder Gehäuseteile von Disposables. Die Verankerungselemente bestehen aus thermoplastischen Polymeren, vorzugsweise aus Polyalkanen, insbesondere Polyethylen und Polypropylen, aus Polysulfonen, Polyethersulfonen und Polyamiden. Sie sind so gestaltet, daß die Einbettung der porösen Membran durch thermische Einwirkung unter Erzeugung einer Schmelze aus thermoplastischem Polymermaterial, vorzugsweise aus den porösen Flächengebilden und/oder dem Material der Verankerungselemente (Direktadaption) oder Hinzufügen eines zusätzlichen thermoplastischen Polymermaterials erfolgen kann.

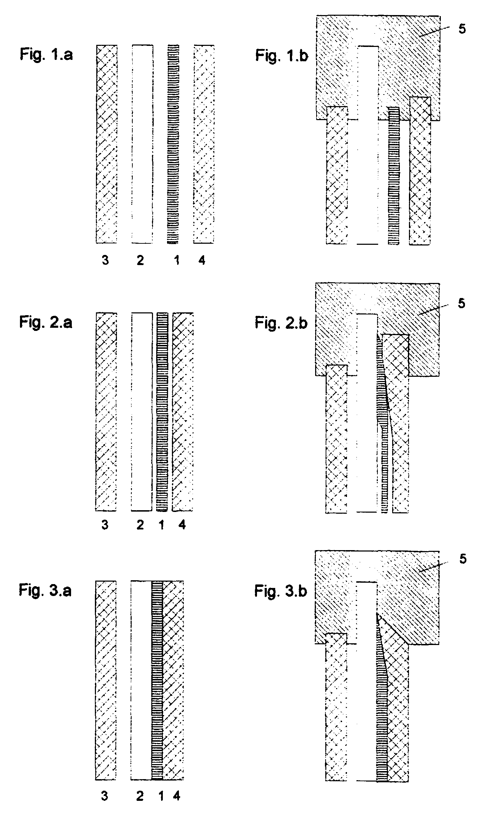

Das thermoplastische Polymermaterial besteht aus einem Material, das ausgewählt ist aus der Gruppe der Polyalkane, halogenierten Polyalkane, Polysulfone, Polyethersulfone und Polyamide.
Die Erfindung wird anhand der Figuren 1a bis 11b und der Ausführungsbeispiele näher erläutert.

### Dabei zeigen

Fig. 1.a eine schematische Darstellung eines Verbundes eines Kernmantel- oder PE-Vlieses mit einer hydrophilen, porösen Membran und weiteren Vliesen/Geweben zur Drainage ohne physikalische/chemische Verbindung vor der Einbettung in ein Verankerungselement,
Fig. 1.b eine schematische Darstellung des Verbundes gemäß der Fig. 1a nach der Einbettung in ein Verankerungselement,
Fig. 2.a eine schematische Darstellung eines Verbundes eines Kernmantel- oder PE-Vlieses mit einer hydrophilen, porösen Membran und weiteren Vliesen/Geweben zur Drainage mit physikalischer/chemischer Verbindung vor der Einbettung in ein Verankerungselement,
Fig. 2.b eine schematische Darstellung des Verbundes gemäß der Fig. 2a nach der Einbettung in ein Verankerungselement,
Fig. 3.a eine schematische Darstellung eines Verbundes eines Kernmantel- oder PE-Vlieses mit einer hydrophilen porösen Membran und einem weiteren Vliese/Gewebe durch Laminierung und einem weiteren Vliese/Gewebe zur Drainage vor der Einbettung in ein Verankerungselement,
Fig. 3.b eine schematische Darstellung des Verbundes gemäß der Fig. 3a nach der Einbettung in ein Verankerungselement,

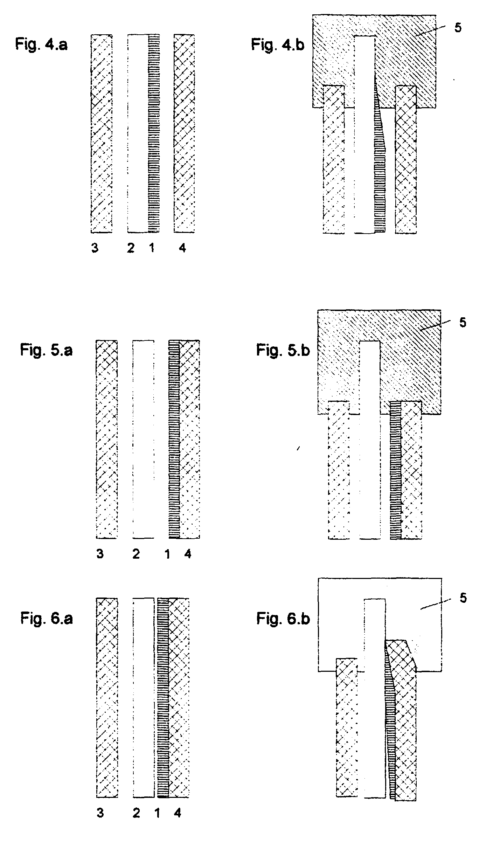

Fig. 4.a eine schematische Darstellung eines Verbundes durch Laminierung des Kernmantel- oder PE-Vlieses mit der hydrophilen, porösen Membran und weiteren Vliesen/Geweben zur Drainage vor der Einbettung in ein Verankerungselement, Fig. 4.b eine schematische Darstellung des Verbundes gemäß der Fig. 4a nach der Einbettung in ein Verankerungselement,
Fig. 5.a eine schematische Darstellung eines Verbundes eines mit dem Drainagevlies laminierten Kernmantel- oder PE-Vlieses mit der porösen Membran ohne physikalische/chemische Verbindung vor der Einbettung in ein Verankerungselement, Fig. 5.b eine schematische Darstellung des Verbundes gemäß der Fig. 5a nach der Einbettung in ein Verankerungselement,
Fig. 6.a eine schematische Darstellung eines Verbundes eines mit einem Drainagevlies laminierten Kernmantel- oder PE-Vlieses mit der porösen Membran mit physikalischer/chemischer Verbindung vor der Einbettung in ein Verankerungselement,
Fig. 6.b eine schematische Darstellung des Verbundes gemäß der Fig. 6a nach der Einbettung in ein Verankerungselement,

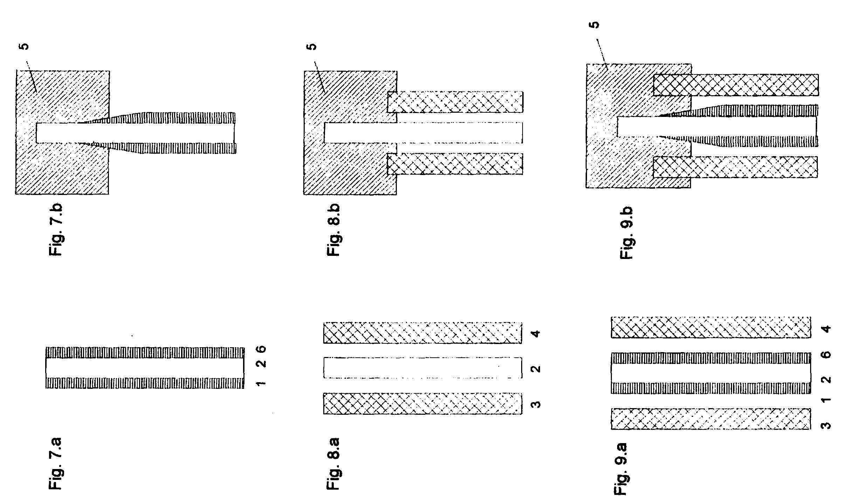

Fig. 7.a eine schematische Darstellung eines Verbundes eines durch beidseitige Laminierung einer hydrophilen, porösen Membran mit Kernmantel- oder PE-Vliesen und ohne Drainagevliese vor der Einbettung in ein Verankerungselement,
Fig. 7.b eine schematische Darstellung des Verbundes gemäß der Fig. 7a nach der Einbettung in ein Verankerungselement,
Fig. 8.a eine schematische Darstellung eines Verbundes eines zwischen einer hydrophilen, porösen Membran und Drainagevliesen auf PP-Basis ohne Kernmantel- oder PE-Vlies vor der Einbettung in ein Verankerungselement,
Fig. 8.b eine schematische Darstellung des Verbundes gemäß der Fig. 8a nach der Einbettung in ein Verankerungselement,
Fig. 9.a eine schematische Darstellung eines Verbundes eines durch beidseitige Laminierung einer hydrophilen, porösen Membran mit Kernmantel- oder PE-Vliesen und Verwendung von Drainagevliesen vor der Einbettung in ein Verankerungselement,
Fig. 9.b eine schematische Darstellung des Verbundes gemaß der Fig. 9a nach der Einbettung in ein Verankerungselement,

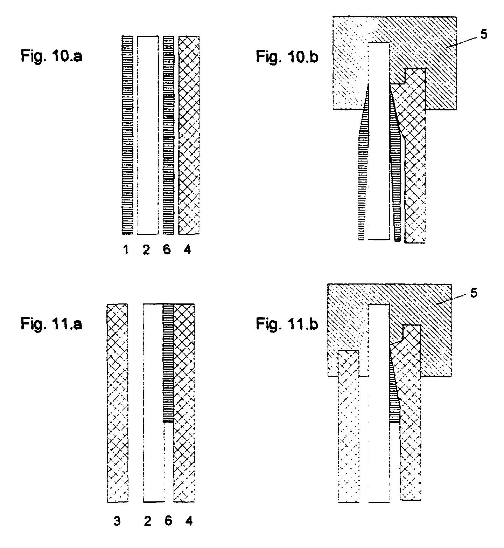

Fig. 10.a eine schematische Darstellung eines Verbundes eines Kernmantel- oder PE-Vlieses mit der porösen Membran mit beidseitiger physikalischer/chemischer Verbindung vor der Einbettung in ein Verankerungselement,
Fig. 10.b eine schematische Darstellung des Verbundes gemäß der Fig. 10a nach der Einbettung in ein Verankerungselement,
Fig. 11.a eine schematische Darstellung eines Verbundes durch Laminierung eines Kernmantel- oder PE-Vlieses ausschließlich im Randbereich der porösen Membran vor der Einbettung in ein Verankerungselement,
Fig. 11.b eine schematische Darstellung des Verbundes gemaß der Fig. 11a nach der Einbettung in ein Verankerungselement,

Zur Ermittlung aufdas Vorliegen von Randhydrophobie wurden plissierte Filterkerzen mit Membranen eines Porendurchmessers von 0,2 µm und einer Membranfläche von 0,7 m² gefertigt, mit RO-Wasser benetzt und bei einem Differenzdruck von 2,5 bar mit Luft als Testgas auf Diffusion überprüft. Filterkerzen mit einem Diffusionsgrenzwert ≥ 10 ml/min wurden als randhydrophob gewertet.
Zum Vergleich wurden analoge Filterkerzen mit randverfilmten Membranen hergestellt, die bekanntlich keine Randhydrophobie aufweisen. Sie zeigten unter den genannten Testbedingungen Diffusionswerte von < 14 ml/min.
Eine Überprüfung der Filterkerzen, die eine Randhydrophobie aufwiesen, nach dem bekannten Bakterien-Challange-Test (BC-Test), zeigte, daß die erhöhten Diffusionswerte nicht auf Membrandefekte zurückzuführen sind.

Zu den gleichen Ergebnissen führten auch Auswertungen von Rasterelektronenmikroskopaufnahmen (REM) von Schnitten im Einbettungsbereich der Verbunde sowie ein Berauchen der Filterkerzen mit Randhydrophobie.

### Beispiel 1

Verbund eines Kernmantel- oder PE-Vlieses **1** mit der porösen Membran **2** und einem weiteren Vlies/Gewebe (Drainagevlies **3** und **4**) ohne physikalische/chemische Verbindung.
Erfolgt der Aufbau des Verbundes der Gestalt, daß die poröse Membran **2**, das Kernmantelvlies **1**, sowie die Drainagevliese 3 und **4** weder durch einen Laminiervorgang, noch durch entsprechende Bedingungen beim Weiterverarbeiten physikalisch-chemisch verbunden werden (Fig. 1.a), so findet die Fixierung der einzelnen Schichten des Verbundes analog WO 85/05286 A und DE 32 40 143 A unabhängig voneinander statt (Fig. 1.b). Da keine direkte Verbindung zwischen dem Kernmantelvlies und der porösen Membran bei der Einbettung in das Verankerungselement 5 gewährleistet ist, erfolgt weder ein Schutz der hydrophilen Membran durch Abführung der Warme durch das schmelzende thermoplastische Vlies an der Membran selbst, noch versiegelt die Schmelze über Kapillar- oder Adhäsionskräfte die beschädigten Bereiche im Randbereich zum Verankerungselement. Bei allen, dermaßen aufgebauten, Filtrationselemente wurde eine Randhydrophobie im Bereich an den Verankerungselementen festgestellt (Tab. 1).

### Beispiel 2

Verbund eines Kernmantel- oder PE-Vlieses **1** mit einer hydrophilen, porösen Membran **2** und einem weiteren Vlies/Gewebe (Drainagevlies 3) mit physikalischer/chemischer Verbindung.
Erfolgt der Aufbau des Verbundes der Gestalt, daß die poröse Membran **2**, das Kernmantelvlies **1**, sowie das Drainagevliese 3 durch entsprechende physikalische Bedingungen beim Weiterverarbeiten -zum Beispiel Plissieren- verbunden werden (Fig. 2..a), so findet die Fixierung der einzelnen Schichten in dem Verankerungselement **5** als Verbund statt. Da eine direkte Verbindung zwischen dem Kernmantelvlies und der porösen Membran bei der Einbettung in das Verankerungselement gewährleistet ist, erfolgt zum einen der Schutz der hydrophilen
Membran durch Abführung der Warme durch das schmelzende thermoplastische Vlies an der Membran selbst, zum anderen versiegelt die Schmelze über Kapillar- oder Adhäsionskräfte die beschädigten Bereiche im Randbereich zum Verankerungselement (Fig. 2.b). Bei einem überwiegenden Teil der dermaßen aufgebauten Filtrationselemente wurde keine Randhydrophobie im Bereich an den Verankerungselementen festgestellt (Tab. 1).

### Beispiel 3

Verbund durch Laminierung des Kernmantel- oder PE-Vlieses **1** mit einer hydrophilen, porösen Membran **2** und einem weiteren Vlies/Gewebe (Drainagevlies **4**).
Erfolgt der Aufbau des Verbundes der Gestalt, daß die poröse Membran **2**, das Kernmantelvlies **1**, sowie das Drainagevliese **4** durch einen Laminiervorgang miteinander verbunden werden (Fig. 3.a), so findet die Fixierung der einzelnen Schichten in dem Verankerungselement **5** als Verbund statt. Da eine direkte Verbindung zwischen dem Kernmantelvlies und der porösen Membran bei der Einbettung in das Verankerungselement gewährleistet ist, erfolgt mm einen der Schutz der hydrophilen Membran durch Abführung der Wärme durch das schmelzende thermoplastische Vlies an der Membran selbst, mm anderen versiegelt die Schmelze über Kapillar- oder Adhäsionskräfte die beschädigten Bereiche im Randbereich zum Verankerungselement (Fig. 3.b). Bei nur zwei von insgesamt 230 dermaßen aufgebauten Filtrationselementen wurde eine Randhydrophobie im Bereich an den Verankerungselementen festgestellt (Tab. 1).

### Beispiel 4

Verbund durch Laminierung eines Kernmantel- oder PE-Vlieses **1** mit einer hydrophilen, porösen Membran **2**.
Erfolgt der Aufbau des Verbundes der Gestalt, daß die poröse Membran **2** und das Kernmantelvlies **1** durch einen Laminiervorgang miteinander verbunden werden (Fig. 4.a), so findet die Fixierung der einzelnen Schichten in dem Verankerungselement **5** als Verbund statt. Der Effekt ist identisch zu Beispiel 3 - ohne zusätzliche Unterstützung
eines Drainagevlieses. (Fig. 4.b). Bei einem von 140 dermaßen aufgebauten Filtrationselementen wurde eine Randhydrophobie im Bereich an den Verankerungselementen festgestellt (Tab. 1).

### Beispiel 5

Verbund ohne physikalische/chemische Verbindung eines mit einem Drainagevlies **4** laminierten Kernmantel- oder PE-Vlieses **1** mit einer hydrophilen, porösen Membran **2**.
Erfolgt der Aufbau des Verbundes der Gestalt, daß die poröse Membran **2** und das mit dem Drainagevlies laminerte Kernmantelvlies **1** weder durch einen weiteren Laminiervorgang, noch durch entsprechende Bedingungen beim Weiterverarbeiten physikalisch-chemisch verbunden werden (Fig. 5.a), so findet die Fixierung der einzelnen Schichten des Verbundes unabhängig voneinander statt (Fig. 5.b). Der Effekt ist identisch zu Beispiel 1.
Bei allen, dermaßen aufgebauten, Filtrationselemente wurde eine Randhydrophobie im Bereich an den Verankerungselementen **5** festgestellt (Tab. 1).

### Beispiel 6

Verbund mit physikalischer/chemischer Verbindung eines mit einem Drainagevlies **4** laminierten Kernmantel- oder PE-Vlieses **1** mit einer hydrophilen, porösen Membran **2**.
Erfolgt der Aufbau des Verbundes der Gestalt, daß die poröse Membran **2** und das mit dem Drainagevlies laminerte Kernmantelvlies **1** durch entsprechende Bedingengen beim Weiterverarbeiten- zum Beispiel plissieren - physikalis-chemisch verbunden werden (Fig. 6.a), so findet die Fixierung der einzelnen Schichten in dem Verankerungselement als Verbund statt. (Fig. 6.b). Der Effekt ist identisch zu Beispiel 2. Bei nur 4 von 30 dermaßen aufgebauten Filtrationselementen wurde Randhydrophobie im Bereich an den Verankerungselementen 5 festgestellt (Tab. 1).

### Beispiel 7

Verbund durch beidseitige Laminierung einer hydrophilen, porösen Membran **2** mit Kernmantel- oder PE-Vliesen **1** und **6** und ohne Drainagevliese.
Erfolgt der Aufbau des Verbundes der Gestalt, daß die poröse Membran **2** beidseitig mit dem Kernmantelvlies **1** und **6** durch einen Laminiervorgang miteinander verbunden werden (Fig. 7.a), so findet die Fixierung der einzelnen Schichten in dem Verankerungselement **5** als Verbund statt. Der Effekt ist identisch zu Beispiel 4 (Fig. 7.b). Bei nur einem der dermaßen aufgebauten Filtrationselemente wurde eine Randhydrophobie im Bereich an den Verankerungselementen festgestellt (Tab. 1).

### Beispiel 8

Verbund zwischen einer hydrophilen, porösen Membran **2** und Drainagevliesen 3 und **4** auf PP-Basis ohne Kernmantel- oder PE-Vlies ohne physikalische/chemische Verbindung.
Erfolgt der Aufbau des Verbundes der Gestalt, daß die poröse Membran **2**, mit den Drainagevliesen ohne ein Kernmanteolvlies (Fig. 8.a) in das Verankerungselement **5** eingebettet werden, so findet die Fixierung der einzelnen Schichten des Verbundes unabhängig voneinander statt (Fig. 8.b). Der Effekt ist identisch zu Beispiel 1.
Bei allen, dermaßen aufgebauten, Filtrationselemente wurde eine Randhydrophobie im Bereich an den Verankerungselementen festgestellt (Tab. 1).

### Beispiel 9

Verbund durch beidseitige Laminierung der porösen Membran **2** mit Kernmantel- oder PE-Vliesen **1** und **6** und Verwendung von Drainagevliesen **3** und **4**.
Erfolgt der Aufbau des Verbundes wie in Beispiel 7 mit der zusätzlichen Verwendung von Drainagevliesen (Fig,9.a), so wird derselbe Effekt wie in Beispiel 7 erzielt (Fig. 9.b) Bei Keinem der dermaßen aufgebauten Filtrationselemente wurde eine Randhydrophobie im Bereich an den Verankerungselementen festgestellt (Tab. 1).

### Beispiel 10

Verbund einer hydrophilen, porösen Membran **2** mit beidseitiger physikalischer/chemischer Verbindung eines Kernmantel- oder PE-Vlieses **1**.
Erfolgt der Aufbau des Verbundes der Gestalt, daß die poröse Membran **2** und die Kernmantelvliese **1** und **6** beidseitig der Membran durch entsprechende Bedingungen beim Weiterverarbeiten- zum Beispiel plissieren - physikalisch-chemisch verbunden werden (Fig. 10.a), so findet die Fixierung der einzelnen Schichten in dem Verankerungselement **5** als Verbund statt. (Fig. 10.b). Der Effekt auf jeder Seite der Membran ist identisch zu Beispiel 2.
Bei allen, dermaßen aufgebauten, Filtrationselemente wurde keine Randhydrophobie im Bereich an den Verankerungselementen festgestellt (Tab. 1).

### Beispiel 11

Verbund durch Laminierung eines Kernmantel- oder PE-Vlieses **1** ausschließlich im Randbereich der porösen Membran **2**.
Erfolgt der Aufbau des Verbundes der Gestalt, daß die poröse Membran **2** im Randbereich zum Verankerungselement mit dem Kernmantelvlies **1** und dem Drainagevlies **4** durch einen Laminiervorgang miteinander verbunden werden (Fig. 11.a), so findet die Fixierung der einzelnen Schichten in dem Verankerungselement **5** als Verbund statt. Der Effekt ist identisch zu Beispiel 2 (Fig. 11.b).
Bei nur einem der dermaßen aufgebauten Filtrationselemente wurde eine Randhydrophobie an den Verankerungselementen festgestellt (Tab. 1).
Dieser Aufbau kann auch mit gleichen Ergebnissen wie in den Beispielen 3, 4, 7, 9 und 11 erfolgen.

**Tabelle 1**

| Ergebnisse der Beispiele 1 bis 12 | | |
|---|---|---|
| Aufbau | Anzahl der gefertigten Filtrationselemente | Anzahl der Filtrationselemente ohne Randhydrophobie |
| Beispiel 1 | PA: 50 | PA: 0 |
| | PESU: 100 | PESU: 0 |
| Beispiel 2 | PA: 50 | PA: 33 |
| | PESU: 50 | PESU: 29 |
| Beispiel 3 | PA: 50 | PA: 50 |
| | PESU: 180 | PESU: 178 |
| Beispiel 4 | PA: 60 | PA: 59 |
| | PESU: 80 | PESU: 80 |
| Beispiel 5 | PA: 50 | PA: 0 |
| Beispiel 6 | PA: 30 | PA: 26 |
| Beispiel 7 | PA: 20 | PA: 19 |
| | PESU: 30 | PESU: 30 |
| Beispiel 8 | PA: 100 | PA: 0 |
| | PESU: 100 | PESU: 0 |
| Beispiel 9 | PA: 40 | PA: 40 |
| Beispiel 10 | PESU: 40 | PESU: 40 |
| Beispiel 11 | PA: 50 | PA: 49 |
| | PESU:20 | PESU:20 |
| | | |
| (PA: Aufbau mit Polyamidmembran, PESU: Aufbau mit Polyethersulfonmembran) | | |

### Beispiel 12

### (Vergleichsbeispiel)

Es wurden drei Typen von plissierten 10'' Dead-End-Filterkerzen, aus einem PP/PE-Kernmantelvlies (Kernmaterial 50% PP, Typ Viledon™ FO 2432 der Firma Carl Freudenberg, DE) und einer hydrophilen Polyamid-6-Membran mit einer Porengröße von 0,2 µm, einem Bubble Point von 3,2 bar und einer Membranfläche von 0,7 m² gefertigt.
Beim Typ 1 wurde erfindungsgemäß die Membran und das Vlies vor dem Plissieren laminiert.
Beim Typ 2 wurden die Membran und das Vlies getrennt plissiert und dann zu einem plissierten Filterelement vereinigt, so daß keinerlei Verbindung zwischen der Membran und dem porösen Flächengebilde existiert.
Beim Typ 3 wurde eine integral verstärkte Membran verwendet.
Die Tabelle 2 Zeigt die bei drei verschiedenen Druckdifferenzen gemessenen Filtrationsleistungen für Wasser bei 20° C in l/min beziehungsweise in %, wobei die Filtrationsleistung der Filterkerzen des Typs 2 mit 100% angesetzt wurden. Die Meßwerte sind aus jeweils 5 Messungen an 5 Filterkerzen des gleichen Typs gemittelt.

**Tabelle 2**

| Kerzentyp | Filtrationsleistung bei Δp = 0,1 bar | | Filtrationsleistung bei Δp = 0,3 bar | | Filtrationsleistung bei Δp = 0,5 bar | |
|---|---|---|---|---|---|---|
| | [l/min] | % | [l/min] | % | [l/min] | % |
| Typ 1 Laminat | 6,1 | **96,8** | 18,1 | **97,3** | 28,8 | **92,6** |
| Typ 2 keine Verbindung | 6,3 | **100** | 18,6 | **100** | 31,1 | **100** |
| Typ 3 integral verstärkt | 4,6 | **73** | 13,2 | **71** | 23,2 | **74,6** |

Wie aus der Tabelle 2 hervorgeht, verfügen nur die erfindungsgemäßen plissierten Filterkerzen des Typs 1, bei der das Filterelement aus einer hydrophilen, porösen Membran besteht, die auf das poröse Flächengebilde auflaminiert ist, über eine vergleichbare hohe Filtrationsleistung. Bei den Filterkerzen des Typs 3 mit integral verstärkten Membranen sinkt die Filtrationsleistung auf einen Wert zwischen 74,6 und 71% ab. Die Filterkerzen des Typs 2 sind aufgrund von Randhydrophobie nicht auf Integrität testbar.

Ein weiterer Vorteil der erfindungsgemäßen Filtrationseinheiten besteht in ihrer erhöhten mechanischen Stabilität im Vergleich zu Filtrationseinheiten, die analog Typ 2 dem Stand der Technik entsprechen. Diese erhöhte Stabilität dürfte auf die physikalische/chemische Verbindung zwischen der hydrophilen, porösen Membran und dem porösem Flächengebilde zurückzuführen sein. Im Falle der Laminierung mit Kernmantelvliesen besitzen die Membranen einen um etwa 3 bar höheren Berstdruck. Der Berstdruck liegt beispielsweise bei PESU-Membranen ohne Laminierung bei nur etwa 0,5 bar. Setzt man erfindungsgemäße Filterkerzen mit aus Kernmantelvliesen laminierten PESU-Membranen (0,2 µm Porendurchmesser) Pulsationen mit einer Druckdifferenz von 6 bar aus, traten selbst nach 6000 Pulsationen keine Schädigungen der Membran auf Nach 20 Zyklen einer Dampfsterilisation von je 30 Minuten Dauer bei 2 bar (134° C) traten keinerlei Veränderungen an den Filterkerzen auf.

## Patentansprüche

1. Auf Integrität testbare Filtrationseinheit mit hydrophilen, porösen Membranen (2), die in ihren Randbereichen mit thermoplastischem Polymermaterial fluiddicht in Verankerungselementen (5) eingebettet sind,
dadurch gekennzeichnet, daß
die hydrophilen, porösen Membranen (2) mindestens in ihren Randbereichen und auf mindestens einer Seite vor der Einbettung mit mindestens einem porösen Flächengebilde aus thermoplastischen Polymerfasern (1, 6) durch Druck- und Temperatureinwirkung verbunden sind.

2. Filtrationseinheit nach Anspruch 1,
dadurch gekennzeichnet, daß
die hydrophilen, porösen Membranen (2) auf den porösen Flächengebilden (1, 6) auflaminiert sind.

3. Filtrationseinheit nach den Ansprüchen 1 und 2,
dadurch gekennzeichnet, daß
die Filtrationseinheit eine Durchflußleistung tur Wasser von mindestens 90% aufweist im Vergleich mit einer Filtrationseinheit, bei der zwischen den Membranen (2) und den Flächengebilden (1, 6) keine Verbindung vorhanden ist.

4. Filtrationseinheit nach den Ansprüchen 1 bis 3,
dadurch gekennzeichnet, daß
die porösen Flächengebilde (1, 6) Vliese, Gewebe, Gewirke und/oder Gitter sind.

5. Filtrationseinheit nach den Ansprüchen 1 bis 4,
dadurch gekennzeichnet, daß
die Polymerfasern der porösen Flächengebilde (1, 6) Kernmantelfasern sind, wobei das Mantelmaterial eine geringere Schmelztemperatur besitzt als das Kernmaterial.

6. Filtrationseinheit nach den Ansprüchen 1 bis 4,
dadurch gekennzeichnet, daß
die Polymerfasern der porösen Flächengebilde (1, 6) aus Polyethylen bestehen und in Form von Vliesen vorliegen.

7. Filtrationseinheit nach den vorstehenden Ansprüchen,
dadurch gekennzeichnet, daß
die hydrophilen, porösen Membranen (2) aus Materialien bestehen, die ausgewählt sind aus der Gruppe der Polysulfone, Polyethersulfone und Polyamide.

8. Filtrationseinheit nach den Ansprüchen 1 bis 3 und 7,
dadurch gekennzeichnet, daß die mit den porösen Flächengebilden (1, 6) verbundenen hydrophilen, porösen Membranen (2) in Form von Flachfiltern, plissierten Filtern oder rohrförmigen Filtern vorliegen.

9. Filtrationseinheit nach Anspruch 1,
dadurch gekennzeichnet, daß
das thermoplastische Polymermaterial aus einem Material besteht, das aus der Gruppe der Polyalkane, Polysulfone, Polyethersulfone und Polyamide ausgewählt ist.

10. Filtrationseinheit nach den Ansprüchen 1 und 9,
dadurchgekennzeichnet, daß
die Verankerungselemente (5) aus den gleichen thermoplastischen Polymermaterialien bestehen, die für die fluiddichte Einbettung der hydrophilen, porösen Membranen (2) in die Verankerungselemente (5) verwendet werden.

11. Filtrationseinheit nach Anspruch 1,
dadurch gekennzeichnet, daß
die Verankerungselemente (5) Teile von Filtergehäusen sind.

12. Filtrationseinheit nach Anspruch 1,
dadurch gekennzeichnet, daß
die Verankerungselemente (5) Endkappen von patronenartigen Filterelementen sind.

13. Filtrationseinheit nach Anspruch 1,
dadurch gekennzeichnet, daß
allein das thermoplastische Polymermaterial die Verankerungselemente (5) bildet.

## Claims

1. Filtration unit which can be tested for integrity and has hydrophilic porous membranes (2), which in their rim regions are embedded in anchoring elements (5) in fluid-type manner by thermoplastic polymer material, characterised in that the hydrophilic porous membranes (2) are connected at least in their rim regions and on at least one side with at least one porous areal structure of thermoplastic polymer fibres (1, 6) by the influence of pressure and temperature before the embedding.

2. Filtration unit according to claim 1, characterised in that the hydrophilic porous membranes (2) are laminated onto the porous area structures (1, 6).

3. Filtration unit according to the claims 1 and 2, characterised in that the filtration unit has a throughflow performance of at least 90% for water by comparison with a filtration unit in which no connection is present between the membranes (2) and the areal structures (1, 6).

4. Filtration unit according to the claims 1 to 3, characterised in that the porous areal structures (1, 6) are fleeces, fabrics, knitwear and/or lattices.

5. Filtration unit according to the claims 1 to 4, characterised in that the polymer fibres of the porous area structures (1, 6) are sheathed core fibres, wherein the sheath material has a lower melting point than the core material.

6. Filtration unit according to the claims 1 to 4, characterised in that the polymer fibres of the porous area structures (1, 6) consist of polyethylene and are present in the form of fleeces.

7. Filtration unit according to the preceding claims, characterised in that the hydrophilic porous membranes (2) consist of materials selected from the group of polysulfones, polyether sulfones and polyamides.

8. Filtration unit according to the claims 1 to 3 and 7, characterised in that the hydrophilic porous membranes (2) connected with the porous area structures (1, 6) are present in the form of flat filters, pleated filters or tubular filters.

9. Filtration unit according to claim 1, characterised in that the thermoplastic polymer material consists of a material selected from the group of polyalkanes, polysufones, polyether sulfones and polyamides.

10. Filtration unit according to the claims 1 and 9, characterised in that the anchoring elements (5) consist of the same thermoplastic polymer materials as are used for the fluid-tight embedding of the hydrophilic porous membranes (2) into the anchoring elements (5).

11. Filtration unit according to claim 1, characterised in that the anchoring elements (5) are parts of filter housings.

12. Filtration unit according to claim 1, characterised in that the anchoring elements (5) are end caps of cartridge-like filter elements.

13. Filtration unit according to claim 1, characterised in that only the thermoplastic polymer material forms the anchoring elements (5).

## Revendications

1. Ensemble de filtration susceptible d'être essayé du point de vue de son absence de défauts, comportant des membranes poreuses hydrophiles (2) qui sont enrobées de façon étanche aux fluides dans leurs zones marginales au moyen d'un matériau polymère thermoplastique dans des éléments d'ancrage (5),
caractérisé en ce que
les membranes poreuses hydrophiles (2) sont reliées avant l'enrobage au moins sur leurs zones marginales et au moins sur une face à au moins une nappe poreuse en fibres polymères thermoplastiques (1, 6) sous l'effet de pression et de chaleur.

2. Ensemble de filtration selon la revendication 1,
caractérisé en ce que
les membranes poreuses hydrophiles (2) sont laminées sur les nappes poreuses (1, 6).

3. Ensemble de filtration selon les revendications 1 et 2,
caractérisé en ce que
l'ensemble de filtration présente un débit pour l'eau d'au moins 90 % par comparaison avec un ensemble de filtration dans lequel il n'y a aucune liaison entre les membranes (2) et les nappes (1, 6).

4. Ensemble de filtration selon les revendications 1 à 3,
caractérisé en ce que
les nappes poreuses (1, 6) sont des voiles de non-tissé, des tissus, des tricots et/ou des grilles.

5. Ensemble de filtration selon les revendications 1 à 4,
caractérisé en ce que
les fibres polymères des nappes poreuses (1, 6) sont des fibres comportant une âme et une enveloppe, le matériau de l'enveloppe présentant une température de fusion inférieure à celle du matériau de l'âme.

6. Ensemble de filtration selon les revendications 1 à 4,
caractérisé en ce que
les fibres polymères des nappes poreuses (1, 6) sont constituées de polyéthylène et se présentent sous forme de voiles de non-tissé.

7. Ensemble de filtration selon les revendications précédentes,
caractérisé en ce que
les membranes poreuses hydrophiles (2) sont constituées de matériaux qui sont choisis dans le groupe formé par les polysulfones, les polyéthersulfones et les polyamides.

8. Ensemble de filtration selon les revendications 1 à 3 et 7,
caractérisé en ce que
les membranes poreuses hydrophiles (2) reliées aux nappes poreuses (1, 6) se présentent sous forme de filtres plats, de filtres plissés ou de filtres tubulaires.

9. Ensemble de filtration selon la revendication 1,
caractérisé en ce que
le matériau polymère thermoplastique est constitué d'un matériau qui est choisi dans le groupe formé par les polyalcanes, les polysulfones, les polyéthersulfones et les polyamides.

10. Ensemble de filtration selon les revendications 1 et 9,
caractérisé en ce que
les éléments d'ancrage (5) sont constitués des mêmes matériaux polymères thermoplastiques que ceux employés pour l'enrobage étanche aux fluides des membranes poreuses hydrophiles (2) dans les éléments d'ancrage (5).

11. Ensemble de filtration selon la revendication 1,
caractérisé en ce que
les éléments d'ancrage (5) constituent des parties de boîtiers de filtres.

12. Ensemble de filtration selon la revendication 1,
caractérisé en ce que
les éléments d'ancrage (5) sont des coiffes d'extrémités d'éléments de filtration du genre cartouche.

13. Ensemble de filtration selon la revendication 1,
caractérisé en ce que
le matériau polymère thermoplastique constitue à lui seul les éléments d'ancrage (5).
